# EUROPEAN PATENT SPECIFICATION

(11) **EP 3 409 114 B1**
(45) Date of publication and mention of the grant of the patent: **11.11.2020**
(21) Application number: 18174988.8
(22) Date of filing: 30.05.2018
(51) Int. Cl.: A01N 31/02, A01P 17/00

(54) **USE OF A COMPOSITION THAT IS PHYSIOLOGICALLY ACTIVE TO CHESTNUT TORTRIX AND CONTROL METHOD USING THE SAME**
VERWENDUNG EINER ZUSAMMENSETZUNG PHYSIOLOGISCH AKTIV FÜR SPÄTER KASTANIENWICKLER UND KONTROLLVERFAHREN UNTER VERWENDUNG DESSELBEN
UTILISATION D'UNE COMPOSITION PHYSIOLOGIQUEMENT ACTIVE AU CARPOCAPSE DES CHÂTAIGNES ET PROCÉDÉ DE CONTRÔLE L'UTILISANT

(30) Priority: 31.05.2017 JP 2017108185
(43) Date of publication of application: 05.12.2018
(73) Proprietor: Shin-Etsu Chemical Co., Ltd., Tokyo 100-0004 (JP)
(72) Inventor: HOJO, Tatsuya, Joetsu-shi, Niigata 942-8601 (JP)
(74) Representative: De Vries & Metman

(56) References cited:
- EP-A1- 2 789 236
- EP-A2- 0 816 430
- WO-A1-96/27289
- WO-A1-2004/086866
- FR-A1- 3 034 672
- JP-A- H0 446 102

## Description

### BACKGROUND OF THE INVENTION

### 1. Field of the Invention

The invention relates to the use of a composition physiologically active to chestnut tortrix and a method for controlling the chestnut tortrix using the composition.

### 2. Related Art

As a method for controlling an insect pest, a mating disruption method of using a sex pheromone or the like is practically used against various insect pests.

To control an insect pest by the mating disruption, an artificially synthesized sex pheromone or the like of a target insect pest is scattered or floated in the atmosphere and disrupts mating between males and females to reduce the mating rate, thereby suppressing the birth of the next generation. Sex pheromone components vary with the types of insect pests and are species-specific. A sex pheromone component is identified by a direct method of extracting a natural sex pheromone composition from pheromone glands of the insect pests with a solvent, an indirect method including use of pheromone lure and EAG (electroantennography), or an analysis using both the methods. In the identification, the component ratio in a natural sex pheromone composition of insect pest is also determined. A composition containing the same components at the same component ratio as those of the natural sex pheromone composition of target insect pest has been widely used for mating disruption.

A natural sex pheromone composition of chestnut tortrix (Cydia splendana), which is an insect pest of chestnuts, varies with regions, and it is known that the composition in Sweden is a mixture of E,Z-8,10-dodecadienyl acetate and E,E-8,10-dodecadienyl acetate, while the composition in central and southern Europe is a mixture of E,E-8,10-dodecadienyl acetate and Z,E-8,10-dodecadienyl acetate (Marie Bengtsson et al., Frontiers in Ecology and Evolution, August 2014, Volume 2, Article 46). In north France, chestnut tortrix having the same natural sex pheromone composition as in Sweden and chestnut tortrix having the same natural sex pheromone composition as in central and southern Europe coexist.

The natural sex pheromone composition of the chestnut tortrix does not contain alcohols (E,Z-8,10-dodecadienol, E,E-8,10-dodecadienol, and Z,E-8,10-dodecadienol) that are obtainable by hydrolysis of the above acetate components (E,Z-8,10-dodecadienyl acetate, E,E-8,10-dodecadienyl acetate, and Z,E-8,10-dodecadienyl acetate).

For example, it is described in JP 2010-47564A that a composition containing an alcohol, obtainable by hydrolysis of an acetate, in an amount of 0.5 to 10% by weight relative to an amount of the acetate is successfully used for mating disruption. This is because the alcohol obtainable by hydrolysis of the acetate exhibits an attraction-inhibiting effect, so that the insect pest behavior is suppressed and as a result, mating behavior is suppressed. However, it is not clear whether an alcohol as a hydrolysate of an acetate can exert the attraction-inhibition effect with respect to any kind of insect pest having the acetate as a pheromone component.

FR3034627 describes an apparatus for dispensing chemicals in the field. Cydia splendana is mentioned as one possible organisms.

### SUMMARY OF THE INVENTION

Mating disruption is preferably performed by using the same component as that in the natural sex pheromone composition of an insect pest. Accordingly, when the composition variable depending on a region is observed, several types of mating disruption preparations are required for the same insect pests. This unfortunately, for example, complicates product management, and requires finding of a product suitable for a target region.

E,E-8,10-Dodecadienyl acetate, which is a common component between the chestnut tortrix in Sweden and that in central and southern Europe, could be used to control the chestnut tortrix, but this component has not been registered in the European agrochemical system and is not approved for use. In addition, a lot of time and cost should be consumed for the approval.

A simple control method of chestnut tortrix is therefore demanded.

The inventors have studied a control method using the natural sex pheromone composition of chestnut tortrix and have found that the chestnut tortrix can be controlled by using E,E-8,10-dodecadienol which is obtainable as a hydrolysate of E,E-8,10-dodecadienyl acetate and is an alcohol not contained in the natural sex pheromone composition of the chestnut tortrix.

In an aspect of the invention, there is provided the use of a composition physiologically active to chestnut tortrix in controlling chestnut tortrix, the composition comprising E,E-8,10-dodecadienol as a substance physiologically active substance to chestnut tortrix.

In another aspect of the invention, there is provided the use of a sustained-release preparation for controlling chestnut tortrix in controlling chestnut tortrix, the preparation comprising the physiologically active composition and a carrier or a container for sustainedly releasing the physiologically active substance in the physiologically active composition.

In still another aspect of the invention, there is provided a method for controlling chestnut tortrix, comprising a step of placing the sustained-release preparation in a field to release the physiologically active substance in the sustained - release preparation into the field.

According to the present invention, chestnut tortrix whose natural sex pheromone composition varies depending on a region can be controlled by using E,E-8,10-dodecadienol, thereby suppressing the damage of chestnuts.

### DETAILED DESCRIPTION OF THE PREFERRED EMBODIMENTS

First, a composition which is physiologically active to chestnut tortrix and comprises E,E-8,10-dodecadienol, which is a physiologically active substance to chestnut tortrix, will be described.

E,E-8,10-Dodecadienolfunctioning as a physiologically active substance to chestnut tortrix is obtainable as a hydrolysate of E,E-8,10-dodecadienyl acetate, which is a component of the natural sex pheromone composition of chestnut tortrix; and is not contained in the natural sex pheromone composition.

E,E-8,10-Dodecadienol is preferably a synthesized compound from the standpoint of economy. E,E-8,10-Dodecadienolcan be produced, for example, by a method comprising a step of subjecting E,E-2,4-hexadienyl acetate to coupling reaction with a Grignard reagent prepared from 6-chloro-1-hexanol as described in JP 1-311037A.

E,E-8,10-Dodecadienol may contain impurities unavoidable in the production thereof, such as E,Z-8,10-dodecadienol, Z,E-8,10-dodecadienol and Z,Z-8,10-dodecadienol, which are geometric isomers of E,E-8,10-dodecadienol. It is difficult to produce E,E-8,10-dodecadienol at a purity of 100%. Even if such pure E,E-8,10-dodecadienol is able to be produced, the product should be extremely expensive and is impractical. Industrially produced E,E-8,10-dodecadienol actually contains geometric isomers thereof: E,Z-8,10-dodecadienol, Z,E-8,10-dodecadienoland Z,Z-8,10-dodecadienol, in a total amount of about 5 to 20% by weight.

The content of E,E-8,10-dodecadienol in the physiologically active composition is preferably 50 to 100% by weight, more preferably 55 to 100% by weight. If the content is less than 50%, a large amount of components other than E,E-8,10-dodecadienolneeded for the control is also required, and as a result, the cost may increase. When geometric isomers thereof are contained, the content of E,E-8,10-dodecadienol is preferably not less than 50% by weight and less than 100% by weight, more preferably not less than 55% by weight and less than 100% by weight.

In the same manner as in the sex pheromone composition of codling moth, the E,E-8,10-dodecadienol may be present together with 1-dodecenol and 1-tetradecenol. In this case, the physiologically active composition to chestnut tortrix can also be used for codling moth simultaneously.

In the physiologically active composition, the total content of 1-dodecenol and 1-tetradecenol is preferably 50% by weight or less from the standpoint of cost or release performance.

The physiologically active composition does not necessarily contain any of E,Z-8,10-dodecadienyl acetate, E,E-8,10-dodecadienyl acetate, and Z,E-8,10-dodecadienyl acetate, which are components contained in the natural sex pheromone composition of chestnut tortrix, but may contain at least one of them. When the at least one sex pheromone component of the insect pest is contained, mating disruption is simultaneously caused, and the control effect may be enhanced.

In the physiologically active composition, the total content of E,Z-8,10-dodecadienyl acetate, E,E-8,10-dodecadienyl acetate, and Z,E-8,10-dodecadienyl acetate is preferably 50% by weight or less, more preferably 30% by weight or less from the standpoint of cost or release performance.

E,Z-8,10-Dodecadienyl acetate, E,E-8,10-dodecadienyl acetate, and Z,E-8,10-dodecadienyl acetate may contain impurities unavoidable in the production thereof, such as geometric isomers.

The physiologically active composition may contain an additive. The additive includes a stabilizer such as 2,6-di-tert-butyl-4-methylphenol (BHT); an antioxidant such as BHT, butylated hydroxyanisole, hydroquinone, and vitamin E; and/or an ultraviolet absorber such as 2-hydroxy-4-octoxybenzophenone and 2-(2'-hydroxy-3'-tert-butyl-5'-methylphenyl)-5-chlorobenzotriazole (HBMCBT). When the physiologically active composition is used in a sustained-release preparation, the additive may be a compound to be released together with a physiologically active substance, or may be a compound not to be released but to remain.

As for the content of each additive in the physiologically active composition, for example, the content of the stabilizer is 0 to 5% by weight, the content of the antioxidant is 0 to 5% by weight, and the content of the ultraviolet absorber is 0 to 5% by weight.

Next, there will be described a method for controlling chestnut tortrix, comprising a step of placing a sustained-release preparation comprising (i) a physiologically active composition comprising a physiologically active substance and (ii) a carrier or a container for sustainedly releasing the physiologically active substance in the physiologically active composition, in a field to release the physiologically active substance in the physiologically active composition into the field.

Examples of the method for controlling chestnut tortrix include mass trapping, lure and kill (or attract and kill), lure and infect (or attract and infect), and mating disruption. According to the invention, the sustained-release preparation can be particularly preferably applied to these examples of the method for controlling chestnut tortrix in a field.

The physiologically active substance in the composition physiologically active to chestnut tortrix may be released into a field in any manner capable of controlling the insect pest. For example, a sustained-release preparation comprising a carrier impregnated with the physiologically active composition or a sustained-release preparation comprising a container (such as a tube, a capsule, an ampule, a can and a bag) containing the physiologically active composition is preferably used to release the active substance in an active manner or a passive manner.

Examples of the active manner include spray and scatter from the can.

Examples of the passive manner include permeation through the container or the carrier.

The sustained-release preparation for controlling chestnut tortrix comprises a physiologically active composition (which comprises a physiologically active substance) and a carrier or a container for releasing the physiologically active substance in the physiologically active composition.

The sustained-release preparation comprising a carrier can be produced by a well-known technique including kneading the active substance with the carrier or impregnating the carrier with the active substance. The shape or size of the carrier varies depending on an application method or application amount. For example, a manually placing preparation comprising a ring-shaped carrier preferably has a ring diameter of 0.01 to 5 m, while a scatter preparation comprising a granular carrier having a spherical or elliptical shape preferably has a granule diameter (major axis for an ellipse) of 0.01 to 5 cm. An amount to be held on a carrier varies depending on an application method or application amount. It is preferably 0.01 mg to 100 g per preparation, more preferably 1 mg to 10 g per preparation.

The sustained-release preparation comprising a container may be produced by a well-known technique, for example, by injecting the physiologically active composition or the like into a polymer tube as a container and then sealing both ends of the tube.

A sustained-release preparation comprising a tube as a container is most suitable because it can uniformly release E,E-8,10-dodecadienol or the like for a long period of time. The inner diameter thereof is preferably 0.5 to 2.0 mm, and the wall thickness thereof is preferably 0.2 to 1.0 mm from the standpoint of maintaining the release at an appropriate rate.

When the number of the release positions is decreased without change in a release amount per unit area, it is desirable not to change the loaded amount per unit length of a single sustained-release preparation comprising a tube, but to change the length of the sustained-release preparation comprising a tube. The length is preferably 0.2 to 100 m, more preferably 0.5 to 20 m, even more preferably 1 to 10 m. However, when two or more sustained-release preparations, each comprising a tube, are connected, the length is not limited to the above.

The loaded amount of a single sustained-release preparation comprising a tube is preferably 150 mg to 3.5 g per meter of the preparation.

The carrier contained by the sustained-release preparation may be made of any material which can stably hold the physiologically active composition and can release at least the physiologically active substance for a certain period of time. Examples of such a material include minerals and polymers.

The container contained by the sustained-release preparation may be made of any material which can sustainedly release a physiologically active substance or the like. Examples of such a material include polymers.

At least a part of the carrier or the container is preferably made of a polymer.

The polymer may be any polymer through which a physiologically active substance or the like can permeate to be released to the outside of a polymer film or wall of the container at an appropriate rate. Examples of the polymer include natural rubbers such as cis-polyisoprene; synthetic rubbers such as isoprene rubber and butadiene rubber; polyolefins such as polyethylene and polypropylene; a copolymer containing 80% by weight or more of ethylene unit such as an ethylene-vinyl acetate copolymer (hereinafter also called "EVA") and an ethylene-acrylate ester copolymer; a biodegradable polyester; and vinyl chloride. The polyethylene and EVA are preferable from the standpoint of economy, versatility or the like.

E,E-8,10-Dodecadienol has poorer compatibility with polyethylene or EVA than E,E-8,10-dodecadienyl acetate, so that a preparation having a long release period of time can be produced by selecting polyethylene or EVA as the polymer and controlling the film or wall thickness with respect to the sustained-release preparation comprising a tube or ampule as a container.

The content of vinyl acetate unit as a repeating unit derived from vinyl acetate in EVA is preferably more than 0% by weight and less than 20% by weight, more preferably 0.5 to 10% by weight, even more preferably 0.5 to 6% by weight from the standpoint of release rate or the rigidity of EVA.

The molecular weight of EVA is not particularly limited, and is preferably a weight-average molecular weight (Mw) of 5,000 to 500,000, as determined by gel permeation chromatography (GPC) with standard polystyrene in consideration of release performance and processability.

Placement of the sustained-release preparations in a field is not particularly limited. For example, the sustained-release preparations are uniformly placed at a density of 1 to 2,000 positions/ha, preferably 10 to 200 positions/ha, in a field to be controlled.

The amount to be released from a single release position varies depending on field environments, weather conditions or the like, and may be any amount capable of uniformly floating an active substance in a field. An amount to be released in a field is preferably 0.01 to 20 g/day/ha.

As described above, chestnut tortrix whose natural sex pheromone composition varies depending on a region can be controlled by using E,E-8,10-dodecadienol.

### EXAMPLES

The invention will next be described with reference to Examples and Comparative Examples. However, it should not be construed that the invention is limited to or by them.

### <Production of sustained-release preparation 1>

Into a polymer tube made of EVA containing 4% by weight of vinyl acetate unit and having an inner diameter of 1.30 mm, a wall thickness of 0.60 mm and a length of 1 m, a composition containing a mixture of 2.2 g of E,E-8,10-dodecadienol, 46 mg of BHT and 23 mg of HBMCBT was injected from one end of the tube, and then both ends of the tube were melted and sealed by high-frequency heating under pressure. As a result, a sustained-release preparation 1 was produced.

### <Production of sustained-release preparation 2>

Into a polymer tube container made of EVA containing 4% by weight of vinyl acetate unit and having an inner diameter of 1.30 mm, a wall thickness of 0.60 mm and a length of 1 m, a composition containing a mixture of 1.4 g of E,E-8,10-dodecadienol, 0.7 g of 1-dodecenol, 0.1 g of 1-tetradecenol, 46 mg of BHT and 23 mg of HBMCBT was injected from one end of the tube, and then both ends of the tube were melted and sealed by high-frequency heating underpressure. As a result, a sustained-release preparation 2 was produced.

### <Production of sustained-release preparation 3>

Into a polymer tube container made of polyethylene and having an inner diameter of 1.30 mm, a wall thickness of 0.60 mm and a length of 1 m, a composition containing a mixture of 2.2 g of E,E-8,10-dodecadienyl acetate, 46 mg of BHT and 23 mg of HBMCBT was injected from one end of the tube, and then both ends of the tube were melted and sealed by high-frequency heating under pressure. As a result, a sustained-release preparation 3 was produced.

### <Control test of chestnut tortrix>

### Examples 1 and 2 and Comparative Examples 1 and 2

In nut fields in France, the sustained-release preparations 1 to 3 were uniformly placed in the respective corresponding fields (100 pieces/ha in each field) on July 7 to perform control test of chestnut tortrix as an insect pest of chestnuts. In Examples 1 and 2, the sustained-release preparations 1 and 2 were used in Fields 1 and 2, respectively, and in Comparative Example 1, the sustained-release preparation 3 was used in Field 3. As Comparative Example 2, Field 4 was used without preparation treatment. Table 1 shows the contents of E,E-8,10-dodecadienol in physiologically active compositions injected into the sustained-release preparations used in the corresponding fields and the results of damage ratios determined on September 29 at the harvest time.

The damage ratio is a criterion of estimating a control effect, and specifically for nuts, the damage ratio represented by {(the number of damaged nuts)/(the number of examined nuts)} × 100 is one of the criteria of the effect. Generally, a smaller numerical value indicates a higher effect.

**Table 1**

| | sustained release preparation | Field | Contentof E,E-8,10-dodecadienol in physiologically active composition (% by weight) | Damage ratio at the harvest time (%) |
|---|---|---|---|---|
| Example1 | 1 | 1 | 90 | 7.4 |
| Example2 | 2 | 2 | 55 | 8.8 |
| Comp.Ex.1 | 3 | 3 | 0 | 9.3 |
| Comp.Ex.2 | none | 4 | - | 20.3 |

In Comparative Example 1 of using a composition containing 90% by weight of E,E-8, 10-dodecadienyl acetate, which is a component in the natural sex pheromone composition of chestnut tortrix, the damage ratio was 9.3% at the harvest time, whereas in Example 1 of using a physiologically active composition containing 90% by weight of E,E-8, 10-dodecadienol, which is a physiologically active substance for the insect pest, and in Example 2 of using a physiologically active composition containing 55% by weight of the physiologically active substance, the damage ratios were 7.4% and 8.8%, respectively. Hence, substantially the same control effects were confirmed.

In Comparative Example 2 of using neither the component of the natural sex pheromone composition nor the physiologically active substance, the damage ratio was 20.3%. The effect of the control method using a component of the natural sex pheromone composition or the physiologically active substance was therefore confirmed.

## Claims

1. Use of a composition physiologically active to chestnut tortrix in controlling chestnut tortrix, the composition comprising E,E-8,10-dodecadienol, which is a substance physiologically active to chestnut tortrix.

2. Use of the composition physiologically active to chestnut tortrix according to claim 1, wherein the content of the E,E-8,10-dodecadienol in the composition is 50 to 100% by weight.

3. Use of the composition physiologically active to chestnut tortrix according to claim 1 or claim 2, the composition further comprising at least one physiologically active substance selected from the group consisting of E,Z-8,10-dodecadienyl acetate, E,E-8,10-dodecadienyl acetate, and Z,E-8,10-dodecadienyl acetate.

4. Use of a sustained release preparation for controlling chestnut tortrix in controlling chestnut tortrix, the preparation comprising:
the physiologically active composition claimed for use in any one of claims 1 to 3, and
a carrier or a container for sustainedly releasing the physiologically active substance in the physiologically active composition.

5. Use of a sustained release preparation for controlling chestnut tortrix according to claim 4, wherein at least a part of the carrier or the container is made of an ethylene-vinyl acetate copolymer.

6. A method for controlling chestnut tortrix, comprising a step of placing the sustained-release preparation claimed for use in claim 4 or claim 5 in a field to release the physiologically active substance in the sustained-release preparation into the field.

## Patentansprüche

1. Verwendung einer Zusammensetzung, die physiologisch aktiv auf den Kastanienwickler (Cydia splendana) wirkt, zur Kontrolle des Kastanienwicklers, wobei die Zusammensetzung E,E-8,10-Dodecadienol umfasst, das eine Substanz ist, die physiologisch aktiv auf den Kastanienwickler wirkt.

2. Verwendung einer Zusammensetzung, die physiologisch aktiv auf den Kastanienwickler wirkt, nach Anspruch 1, wobei der Gehalt an E,E-8,10-Dodecadienol 50 bis 100 Gew.-% beträgt.

3. Verwendung einer Zusammensetzung, die physiologisch aktiv auf den Kastanienwickler wirkt, nach Anspruch 1 oder Anspruch 2, wobei die Zusammensetzung ferner mindestens eine physiologisch aktive Substanz aufweist, die aus der Gruppe ausgewählt ist, die aus E,Z-8,10-Dodecadienylacetat, E,E-8,10-Dodecadienylacetat und Z,E-8,10-Dodecadienylacetat besteht.

4. Verwendung eines Präparats mit verzögerter Freisetzung zur Kontrolle des Kastanienwicklers in der Kontrolle des Kastanienwicklers, wobei das Präparat aufweist:
die physiologisch aktive Zusammensetzung zur Verwendung nach einem der Ansprüche 1 bis 3, und
einen Träger oder ein Behältnis zur anhaltenden Freisetzung der physiologisch aktiven Substanz in der physiologisch aktiven Zusammensetzung.

5. Verwendung eines Präparats mit verzögerter Freisetzung zur Kontrolle de Kastanienwicklers in der Kontrolle des Kastanienwicklers nach Anspruch 4, wobei mindestens ein Teil des Trägers oder des Behälters aus einem Ethylen-Vinylacetat-Copolymer hergestellt ist.

6. Verfahren zur Kontrolle des Kastanienwicklers, aufweisend einen Schritt des Einbringens des Präparats mit verzögerter Freisetzung nach Anspruch 4 oder 5 auf ein Feld, um die physiologisch aktive Substanz in dem Präparat mit verzögerter Freisetzung in dem Feld freizusetzen.

## Revendications

1. Utilisation d'une composition physiologiquement active vis-à-vis du carpocapse des châtaignes dans la lutte contre le carpocapse des châtaignes, la composition comprenant de l'E,E-8,10-dodécadiénol, qui est une substance physiologiquement active vis-à-vis du carpocapse des châtaignes.

2. Utilisation de la composition physiologiquement active vis-à-vis du carpocapse des châtaignes selon la revendication 1, dans laquelle la teneur de l'E,E-8,10-dodécadiénol dans la composition est de 50 à 100 % en poids.

3. Utilisation de la composition physiologiquement active vis-à-vis du carpocapse des châtaignes selon la revendication 1 ou la revendication 2, la composition comprenant en outre au moins une substance physiologiquement active choisie dans le groupe constitué de l'acétate d'E,Z-8,10-dodécadiényle, de l'acétate d'E,E-8,10-dodécadiényle, et de l'acétate de Z,E-8,10-dodécadiényle.

4. Utilisation d'une préparation à libération prolongée pour lutter contre le carpocapse des châtaignes dans la lutte contre le carpocapse des châtaignes, la préparation comprenant :
la composition physiologiquement active revendiquée pour une utilisation selon l'une quelconque des revendications 1 à 3, et
un vecteur ou un récipient pour la libération prolongée de la substance physiologiquement active dans la composition physiologiquement active.

5. Utilisation d'une préparation à libération prolongée pour lutter contre le carpocapse des châtaignes selon la revendication 4, dans laquelle au moins une partie du vecteur ou du récipient est constituée d'un copolymère d'éthylène-acétate de vinyle.

6. Procédé de lutte contre le carpocapse des châtaignes, comprenant une étape de mise en place de la préparation à libération prolongée revendiquée pour une utilisation selon la revendication 4 ou la revendication 5 dans un champ pour libérer la substance physiologiquement active dans la préparation à libération prolongée dans le champ.
